(19) Europäisches Patentamt
European Patent Office
Office européen des brevets

(11) **EP 4 657 316 A1**

(12) **EUROPEAN PATENT APPLICATION**

(43) Date of publication:
**03.12.2025 Bulletin 2025/49**

(21) Application number: **24179282.9**

(22) Date of filing: **31.05.2024**

(51) International Patent Classification (IPC):
***G06N 3/042*** *(2023.01)* ***G06N 3/047*** *(2023.01)*
***G06N 3/09*** *(2023.01)* ***G06N 5/025*** *(2023.01)*
***G06N 7/01*** *(2023.01)* ***G06N 20/10*** *(2019.01)*

(52) Cooperative Patent Classification (CPC):
**G06N 3/042; G06N 3/047; G06N 3/09; G06N 5/025; G06N 7/01;** G06N 20/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventor: **Yang, Yinchong**
**85579 Neubiberg (DE)**

(74) Representative: **Siemens Patent Attorneys**
**Postfach 22 16 34**
**80506 München (DE)**

# (54) METHODS AND SYSTEMS FOR PROBABILISTIC RELATIONAL LEARNING

(57) Methods and systems for fully quantifying predictive uncertainty for recommender systems are disclosed. Embodiments include providing a fully Bayesian multiway neural network model, assigning a prior distribution over a plurality of weight parameters of a model parameter set of the neural network model such that a corresponding posterior distribution represents an epistemic uncertainty of the neural network model; incorporating a mixture density model for a target layer of the neural network model, wherein the mixture density model models aleatoric uncertainty of input data; estimating the posterior distribution of the weight parameters given training data by updating the prior distribution based on data likelihood of the training data; sampling a plurality of empirical samples from the estimated posterior distribution of the weight parameters; performing inference for each stochastic realization of the neural network model with the sampled weight parameters on an inference sample to generate one or more predictive distributions; drawing samples from each of the one or more predictive distributions as final predictions for the inference sample to obtain a matrix of predictions for the inference sample, wherein the matrix represents a joint distribution of both the aleatoric and epistemic uncertainty of the recommender system.

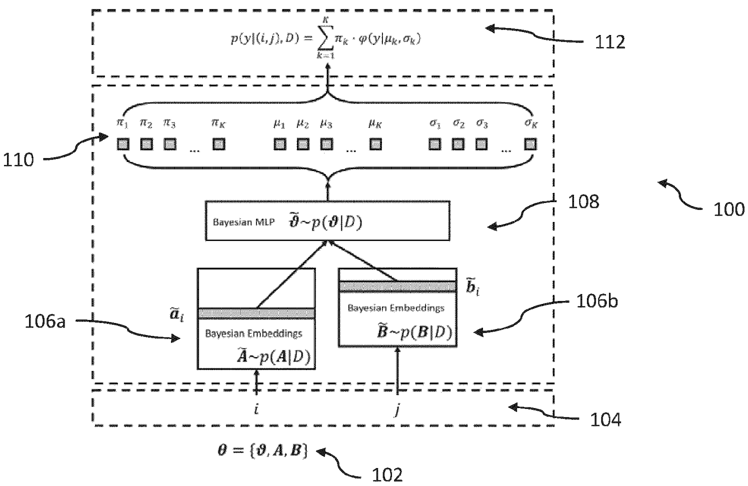


Fig. 1



EP 4 657 316 A1

## Description

### TECHNICAL FIELD

The present disclosure relates to uncertainty-aware recommender systems, in particular to a computer-implemented method and a system for automatically quantifying predictive uncertainty of a recommender system.

### BACKGROUND

Relational learning is a subfield of machine learning that focuses on modeling relation or interaction between entities.

Various collaborative filtering models and algorithms have been developed to build predictive models, ranging from classical Singular-Value-Decomposition, K-Nearest-Neighbors and Non-negative Matrix Factorization to modern autoencoders and multiway neural networks. Many of these methods have delivered impressive performance in terms of point estimate / prediction, i.e., by evaluating a holdout set of $y_{i,j}$ with their corresponding predictions $\hat{y}_{i,j}$. None of them could, however, produce quantifiable predictive uncertainty. For example, when the model is supposed to make a prediction for a new user *i* and/or a seldom item *j* that are underrepresented in a database storing relationships between users and items, none of the conventional models can express that it is less certain about its prediction compared with a prediction made, for example, for a loyal, regular customer and a popular item. Similarly, when recommender systems are used to detect novel drug-target interactions to facilitate new drug discoveries, it is crucial for such systems to be uncertainty aware, since large costs are associated with studies required for target validation. In another example, a recommender system may be recommending a setting or value of an adjustable parameter of an object for an application of the object. For example, the object can be a device of an industrial facility comprising a plurality of devices and the application might correspond to an operating state of the facility. Therein, different devices of the facility might be of a different device type, e.g. pumps, valves, motors etc. Each device might have at least one, but typically a plurality of adjustable parameters, each of which can be adjusted to have a desired setting. Such desired setting of the respective adjustable parameter may be provided by a recommendation method and system as recommended setting which, in the end, depends on the particular object and device, respectively, and on the considered application and operating state, respectively. In such cases, however, particular applications or situations often require domain knowledge as well as the consideration of big amounts of data to act on the recommended setting. Due to the complexity of such facilities, the decision about which settings have to be applied for which adjustable parameter for which device and in which operating state is a complicated task which may be addressed by automatically and rapidly recommending certain implementations of the settings while being uncertainty-aware, i.e., while efficiently quantifying predictive uncertainties of the recommendations.

### SUMMARY

The present disclosure is defined by the independent claims. Dependent claims describe embodiments thereof. This summary is provided to introduce a selection of concepts in a simplified form that are further described below in the detailed description. This summary is not intended to identify key features or essential features of the claimed subject matter, nor is it intended to be used to limit the scope of the claimed subject matter.

Conventionally, a classical supervised machine learning model learns a mapping function $y = f(x), x \in \mathbb{R}^d$ from a d-dimensional, often continuous input space, to output space. This mapping can be then exploited to perform prediction on new data samples. For instance, an input x could be an RGB image and output could be the class of objects seen on the image. Relational learning, in contrast, aims to model the relation between entities. For example, two categories of entities *i and j* may have their relation modelled by a mapping function $f(i,j), i,j \in N$. For instance, entity *i* could be a certain customer and *j* a product and the relation between them could be the amount of time the customer has spent browsing the item, represented as a continuous number, or whether the customer has indeed purchased the item, represented by a binary number. A database of such user-item interactions is often represented as a very sparse matrix, denoted as *Y* with each row $y_{i,\bullet}$ representing the interaction customer *i* with all items and each column $y_{\bullet,j}$ representing the interaction between each item j with all customers. Since there are typically large numbers of users and items, respectively, the matrix Y is often a sparse one. The prediction model $\hat{y}_{i,j} = f(i,j)$ is firstly trained to reconstruct all known entries in the matrix, and secondly expected to predict values that are not present in the matrix. Such prediction can be often interpreted as recommendations. For example, if the model predicts that a user is likely to spend a large amount of time browsing an item, it is an indicator that the user could potentially be interested in the item and a recommendation of the item should be made to the user.

In another example a recommender system and method for recommending a setting or value of an adjustable parameter of a device in a facility and a certain operating state of the facility may be provided with a quantified uncertainty about the recommended setting or value.

Conventionally there are mainly three categories of collaborative filtering algorithms to model the predictive uncertainty of a collaborative filtering task based on representation learning (i.e., matrix decomposition): classical linear models, Gaussian Process (GP) based models and Multiway Neural Networks. The linear models are easy to fit and often smaller in size but fail to capture any kind of uncertainty. Furthermore, these methods assume a smaller and less sparse user-item matrix since they encode the unknown entries as 0 and try to reconstruct all entries. If the matrix is extremely sparse the model is easily overfit.

The GP based approaches can model non-linearity between the target and input indices as well as the full predictive uncertainty. The major challenge associated with GP is its scalability in that the GP Latent Variable Models fail to scale to large data due to the same reason as the linear models above, in that they assume a fairly dense matrix to be decomposed. With Multi-way (MW) Exact GP one can fit the model to matrices that are arbitrarily sparse, but the total amount of entries is expected to be small since MW Exact GP is a non-parametric model and must store all training samples as part of the model itself. By replacing the exact GP with its more scalable variants like sparse variational Gaussian Process (SVGP) and parallel partial Gaussian Process (PPGP) uncertainty-aware recommendations were achieved using GP to perform sparse matrix decomposition ([1] Yang and Büttner 2021). In practice, however, the size of the model is still an obstacle due to the compressed dataset (i.e., inducing points). Another challenge is that despite the potential of MW Scalable GP, this kind of model consists of much more hyper parameters regarding the inducing points and choice of kernels. To optimize these hyper parameters, one would need more computational resources.

A Gaussian Process Latent Variable Model (GPLVM) ([2] Lawrence 2003, [1] Yang and Büttner 2021]) uses a Gaussian process as a prior distribution for a function that maps a low-dimensional latent space to a high-dimensional data matrix. The individual components of this mapping function are modelled as independent draws from a Gaussian process, assuming all dimensions of the data matrix are independent, which may be questionable in the context of collaborative filtering. Furthermore, being designed primarily as a dimensionality reduction method for data with few missing values, it is not readily amenable to the triple-based learning paradigm of collaborative filtering.

Multiway Exact Gaussian Process (MW Exact GP) may a simple and intuitive simplification of the MW Scalable GP method, where the scalable GP is replaced with an exact GP. This approach may only be advantageous if one realizes that the entire training dataset is small enough to be stored in memory. In comparison with scalable GP the exact model does not need inducing points and may be more reliable in its predictions.

Multi-way Neural Networks (MWNN) ([3] Nickel et al. 2015) have shown impressive results in the tasks of matrix decomposition. These models are also much smaller in size than the GP models and easier to train and tune in hyper parameters. Conventionally, native regression neural networks do not quantify the uncertainty in its predictions and even if they do (e.g., as in case of binary matrix entries), the predicted uncertainty tends to be over-confident without proper post calibration. Cheap approximating methods such as ensemble of networks or Markov Chain (MC) dropout can model the epistemic uncertainty but are missing solid mathematical foundation.

Embodiments of the present disclosure are generally directed to solutions that enable a full quantification of predictive uncertainty (i.e., of both aleatoric and epistemic uncertainties) of a recommender system using a fully Bayesian multiway neural network model. Accordingly, the method comprises: assigning a prior distribution over a plurality of weight parameters of a model parameter set of the neural network model such that a corresponding posterior distribution represents an epistemic uncertainty of the neural network model; incorporating a mixture density model for a target layer of the neural network model, wherein the mixture density model models aleatoric uncertainty of input data; estimating the posterior distribution of the weight parameters given training data by updating the prior distribution based on data likelihood of the training data; sampling a plurality of empirical samples from the estimated posterior distribution of the weight parameters; performing inference for each stochastic realization of the neural network model with the sampled weight parameters on an inference sample to generate one or more predictive distributions; drawing samples from each of the one or more predictive distributions as final predictions for the inference sample to obtain a matrix of predictions for the inference sample, wherein the matrix represents a joint distribution of both the aleatoric and epistemic uncertainty of the recommender system.

In some embodiments, the inference sample may comprise an input pair of two or more categories of entities whose relation may be modelled by a mapping function.

In some embodiments, the inference sample may comprise an input pair comprising a setting of an adjustable parameter of a device in a facility and a certain operating state of the facility; or the input pair may comprise a user and an item and a mapping function between them may comprise an amount of time the user has spent browsing the item.

In one or more embodiments, the mixture density model may comprise a Gaussian mixture model. One advantage of using a Gaussian mixture model as part of a mixture density model is its flexibility in modeling complex data distributions. Gaussian mixture models are capable of representing a wide range of distribution shapes and can capture multi-modal patterns in the data. This flexibility allows the model to accurately represent data that may exhibit non-linear or non-Gaussian characteristics.

In one or more embodiments, estimating the posterior distribution may comprise using a variational distribution that may comprise a family of isotropic Gaussian distributions. Variational inference is a method used to approximate complex posterior distributions by fitting a simpler distribution, known as the variational distribution, to a target distribution. By using a family of isotropic Gaussian distributions as the variational distribution, computational efficiency, scalability, simplification of inference procedures, and interpretability of latent spaces, are achieved through the variational inference process.

In some embodiments, estimating the posterior distribution may further comprise maximizing an Evidence Lower Bound, ELBO, term between the family of isotropic Gaussian distributions and the posterior distribution of the weight parameters, so that a Kullback-Leibler, KL, divergence from the family of isotropic Gaussian distributions to the posterior distribution of the weight parameters is minimized. This has the advantage of providing a trade-off between accuracy and computational efficiency. Maximizing the ELBO so that the KL divergence is minimized allows for an efficient approximate Bayesian inference, as it avoids the need for computationally expensive methods such as Markov chain Monte Carlo (MCMC) sampling. Instead, it provides a scalable and tractable framework for estimating the posterior distribution of the weight parameters.

In one or more embodiments, estimating the posterior distribution may further comprise updating the ELBO term using a re-parameterization approach. By using a re-parameterization approach, the ELBO term becomes differentiable with respect to the variational parameters, enabling the use of techniques like stochastic gradient descent (SGD) methods. These methods efficiently update the variational parameters by iteratively computing and adjusting the gradients of the ELBO term. This enables faster convergence and more effective exploration of the variational distribution space.

In some embodiments, the mixture density model may generate three vectors as output to parameterize a Gaussian mixture model; and/or the prior distribution over the weight parameters may be a uniform distribution. The generation of three vectors as output to parameterize a Gaussian mixture model allows for a more expressive representation of the mixture components. Each vector can correspond to the mean, covariance, and mixture weight of a Gaussian component, respectively. This enables the model to capture complex data distributions that may require multiple modes or varying variances. By parameterizing the mixture model with multiple vectors, the model can better adapt to the data and provide a more accurate representation of the underlying distribution. Furthermore, using a uniform distribution as the prior distribution over the weight parameters offers a straightforward and non-informative prior assumption. A uniform prior assigns equal probability to all possible values of the weight parameters, indicating that there is no prior preference or bias towards any specific mixture component. This allows the model to be more flexible and data-driven, as it does not impose strong assumptions or biases on the mixture weights. The uniform prior enables the model to adapt to the data and learn the optimal mixture weights based on the observed patterns and characteristics of the data.

In one or more embodiments, the one or more predictive distributions may be generated by incorporating the sampled parameters into the mixture density model. By incorporating sampled parameters into the mixture density model, the predictive distributions can provide probabilistic measures of uncertainty for each prediction. This allows for more informed decision-making, as the uncertainty estimates can guide actions or interventions based on the level of confidence in the predictions.

In one or more embodiments, the method may further comprise upper bounding a prediction of a standard deviation of the mixture density model using a sigmoid function. This way, an unbounded, free standard deviation parameter may not grow infinitely large during training to increase a log likelihood, i.e., the training objective, without a prediction of a mean really being matched to a target variable.

In one or more embodiments, the rows of the matrix may represent predictions of stochastic realizations of the neural network model and columns of the matrix may represent the samples drawn from each predictive distribution. This provides the advantage of capturing and analyzing the variability and uncertainty in the predictions, facilitates visualization and statistical analysis, and enables scalability and efficiency in handling large datasets or complex models.

In one or more embodiments, the method may further comprise adjusting a size of the empirical samples and a number of samples drawn from each predictive distribution. Thus, the method may strike a balance between computational efficiency and the accuracy of the uncertainties. A smaller size of empirical samples can reduce the computational burden, allowing for faster prediction generation. On the other hand, a larger size of empirical samples can provide a more accurate estimation of the predictive distributions, resulting in more reliable predictions of the uncertainties.

Other embodiments may include a recommender system for providing a recommended setting for a parameter to be adjusted, comprising a computer configured to execute the method according to any one of the methods described above so that a joint distribution of both the aleatoric and epistemic uncertainty of the recommender system regarding the recommended setting is provided with the recommended setting.

Other embodiments may include a non-transitory computer-readable storage medium storing computer-executable instructions which, when executed by at least one processor, may cause the at least one processor to perform the method according to any one of the methods described above.

Other embodiments may include a computer program product comprising instructions which, when executed by at least one processor, may cause the at least one processor to perform the method according to any one of the methods described above.

Other embodiments may include a system for quantifying predictive uncertainty of a recommender system using a fully Bayesian multiway neural network model, the system comprising:
one or more processing devices; and
one or more storage devices, the one or more storages devices storing computer-readable instructions that, when executed by the one or more of the processors, cause the one or more of the processors to perform the method according to any one of the methods described above.

## BRIEF DESCRIPTION OF THE DRAWINGS

Aspects, features, and benefits of various embodiments of the present disclosure will become apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:

Fig. 1 is a schematic diagram illustrating a system for fully quantifying predictive uncertainty of a recommender system, according to the present disclosure.

Fig. 2 is a schematic diagram illustrating a computer-implemented method for fully quantifying predictive uncertainty of a recommender system, according to the present disclosure.

## DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

Variational Bayesian methods are a family of techniques for approximating intractable integrals arising in Bayesian inference and machine learning. They are typically used in complex statistical models consisting of observed variables (usually termed "data") as well as unknown parameters and latent variables, with various sorts of relationships among the three types of random variables, as might be described by a graphical model. As typical in Bayesian inference, the parameters and latent variables are grouped together as "unobserved variables". Variational Bayesian methods are primarily used to provide an analytical approximation to the posterior probability of the unobserved variables, in order to do statistical inference over these variables. For the purpose of approximating a posterior probability, variational Bayes is an alternative to Monte Carlo sampling methods-particularly, Markov chain Monte Carlo methods such as Gibbs sampling-for taking a fully Bayesian approach to statistical inference over complex distributions that are difficult to evaluate directly or sample. In particular, whereas Monte Carlo techniques provide a numerical approximation to the exact posterior using a set of samples, variational Bayes provides a locally optimal, exact analytical solution to an approximation of the posterior.

In conventional variational inference, the posterior distribution over a set of unobserved variables given some data may be approximated by a so-called variational distribution. This distribution may be restricted to belong to a family of distributions of a simpler form (e.g. a family of Gaussian distributions), selected with the intention of making the variational distribution similar to the true posterior distribution.

The present disclosure describes a fully Bayesian Multiway Neural Network based on a Multiway Neural Network architecture.

Fig. 1 is schematic diagram illustrating a system (100) for fully quantifying predictive uncertainty of a recommender system, according to the present disclosure. That is, the system (100) of Fig. 1 provides efficient and simultaneous quantification of aleatoric and epistemic uncertainty of a prediction model, such as a recommender system. The system (100) may assume a prior distribution for each weight in the neural network model such that the corresponding posterior distribution represents the epistemic uncertainty of the model. For example, the neural network model may be a simple neural network as universal approximator, parameterized by $\theta$, and all Bayesian parameters, including Bayesian embeddings A and B (106a, 106b) and Multilayer Perceptron (MLP) weights (102) may be initially assumed. For example, the model may comprise embedding layers A and B for users *i* and items *j* (104) respectively. Then, the system (100) may incorporate a mixture density model (110) ([4] Bishop 1994) for a target layer that models the aleatoric uncertainty (108) in dependence of an input data D explicitly. These two sources of uncertainties form the final predictive uncertainty following the generic formulation of a fully Bayesian model, wherein the model output (112) is a mixture of Gaussians as predictive distribution. The fully Bayesian model may be defined as:

$$p(y^*|x^*, D) = \int p(y^*|x^*, \boldsymbol{\theta})p(\boldsymbol{\theta}|D)\, d\boldsymbol{\theta}, \qquad (1)$$

where $p(y^*|x^*, \theta)$ quantifies the aleatoric uncertainty of a point estimate y* given input $x^*$ and model parameter set $\theta$, while $p(\theta|D)$ is the posterior distribution of model parameters given training data D. For the collaborative filtering model, the input vector x is a pair of indices:

$$x = (i, j),$$

and for simplicity, we *x* may be used instead of (i,j).

The present disclosure proposes to implement the aleatoric uncertainty of a multiway neural network using a mixture density (MD) model:

$$\begin{aligned} p(y^*|\boldsymbol{x}^*, \boldsymbol{\theta}) &= MD\left(y^* \middle| \boldsymbol{\pi}(x^*, \boldsymbol{\theta}), \boldsymbol{\mu}(x^*, \boldsymbol{\theta}), \boldsymbol{\sigma}(x^*, \boldsymbol{\theta})\right) \\ &= \sum_{k=1}^{K} \pi_k(x^*, \boldsymbol{\theta}) \cdot \varphi(y^*|\mu_k(x^*, \boldsymbol{\theta}), \sigma_k(x^*, \boldsymbol{\theta})) \qquad (2) \end{aligned}$$

where a neural network may generate three vectors as output (x*, $\theta$), $\mu(x^*, \theta)$, $\sigma(x^*, \theta)$ to parameterize a Gaussian mixture model, and wherein <p(-) represents a parameterized Gaussian probability density function. The advantage of using an MD model is twofold:

i. With a weighted mixture of multiple Gaussians, one has the possibility to model multi-modality in the distribution of the target variable. For instance, the attitude that a user has towards certain items could fall in two extremes, i.e., it is equally likely that a user loves an item as he hates it. More importantly, the mixture Gaussian model enables to experiment with different choices of K (i.e., the total number of Gaussians) so that the model can be optimized to different data situations.

ii. The mixture Gaussian model - even in case of K=1 - parameterizes the predictive standard deviation on the input. This is an important feature for the aleatoric uncertainty if heteroscedasticity is suspected, i.e., certain inputs are always associated with systematically larger or smaller uncertainty. For instance, some items may enjoy very mixed reviews in a community of users.

The epistemic uncertainty may be modelled using a Bayesian treatment of the weight parameters. For example, some prior distribution over the weight parameters is assumed, typically a neutral (e.g., uniform) distribution, and then this assumption may be updated into the posterior distribution by incorporating data likelihood. Such a Bayesian framework as described herein, enables incorporating prior knowledge into the model and, more importantly, balancing this prior knowledge against empirical data. Intuitively, the more data is collected, the less important the prior belief becomes. This results in a posterior distribution over the weights that quantifies the model epistemic uncertainty. This is a desirable feature since, for example, predictions for a new user or a new item that has just been added to a database should intuitively be less certain than users and items that have a lot of entries in the database. Conventionally, only GP based matrix decomposition models possess such feature, but as known in the art and as discussed above, GP models are either less scalable or need more thorough and expensive hyper parameter optimization. Technically, the prior distribution can be also seen as a regularization term on the weights and can prevent model over-fitting to a certain extent. The architecture of the model according to the present disclosure is summarized in Fig. 1.

In order to approximate the intractable integral defining the fully Bayesian neural network model as described above, variational Bayesian methods may be used. For example, since the posterior distribution of the weight parameters $p(\theta|D)$ is intractable, a family of isotropic Gaussian distributions $q_\omega(\theta)$ may be used that may be parameterized with $\omega$ and which minimizes a Kullback-Leibler (KL) divergence from $q_\omega(\theta)$ to $p(\theta|D)$, i.e., maximizes an Evidence Lower Bound (ELBO) term as known from variational Bayesian methods and as seen below:

$$argmin_{\omega}\, KL\big(q_{\omega}(\boldsymbol{\theta}) \,||\, p(\boldsymbol{\theta}|D)\big) = argmax_{\omega} ELBO(\boldsymbol{\omega}) \qquad (3)$$

With

$$ELBO(\boldsymbol{\omega}) = \int q_{\omega}(\boldsymbol{\theta}) \log p(D|\,\boldsymbol{\theta})\, d\boldsymbol{\theta} - KL\big(q_{\omega}(\boldsymbol{\theta})\big|p(\boldsymbol{\theta})\big) \qquad (4)$$

where the likelihood is defined as

$$p(D|\,\boldsymbol{\theta}) = \prod_{n=1}^{N} MD\big(y_n\big|\boldsymbol{\pi}(x_n,\boldsymbol{\theta}), \boldsymbol{\mu}(x_n,\boldsymbol{\theta}), \boldsymbol{\sigma}(x_n,\boldsymbol{\theta})\big) \; (5)$$

and can be integrated into the general framework of Variational Inference. In order to update the ELBO term using conventional gradient methods such as Stochastic gradient descent (SGD), conventional approaches may be applied such as a log derivative approach or a re-parameterization approach.

As for any Bayesian Neural Network, an inference process may involve sampling empirical samples from the posterior distribution (approximated via the variational Bayesian method as described above). For example, firstly a size of the empirical samples may be defined to be M and samples may be drawn according to:

$$\widehat{\boldsymbol{\theta}}^{[m]} \sim q_{\omega}(\boldsymbol{\theta}) = \hat{p}(\boldsymbol{\theta}|\boldsymbol{D}) \, (6)$$

form = 1 ... *M*.

Secondly, inference may be performed on each stochastic realization of the model with parameters $\hat{\theta}^{[m]}$ on some inference sample: $x^* = (i, j)$, generating *M* predictive distributions:

$$\tilde{p}^{[m]} = p\big(y^*|x^*, \widehat{\boldsymbol{\theta}}^{[m]}\big) = \sum_{k=1}^{K} \pi_k\big(x^*, \widehat{\boldsymbol{\theta}}^{[m]}\big) \cdot \varphi\big(y^*|\mu_k\big(x^*, \widehat{\boldsymbol{\theta}}^{[m]}\big), \sigma_k\big(x^*, \widehat{\boldsymbol{\theta}}^{[m]}\big)\big) (7)$$

In a third step, T samples may be drawn from each of the distributions $\tilde{p}^{[m]}$ as prediction, resulting a $M \times T$ matrix (as seen in the example below) as the final prediction for the input pair (*i, j*).

Without limiting the scope of the disclosure and for illustrative purposes only, the following example may be considered:

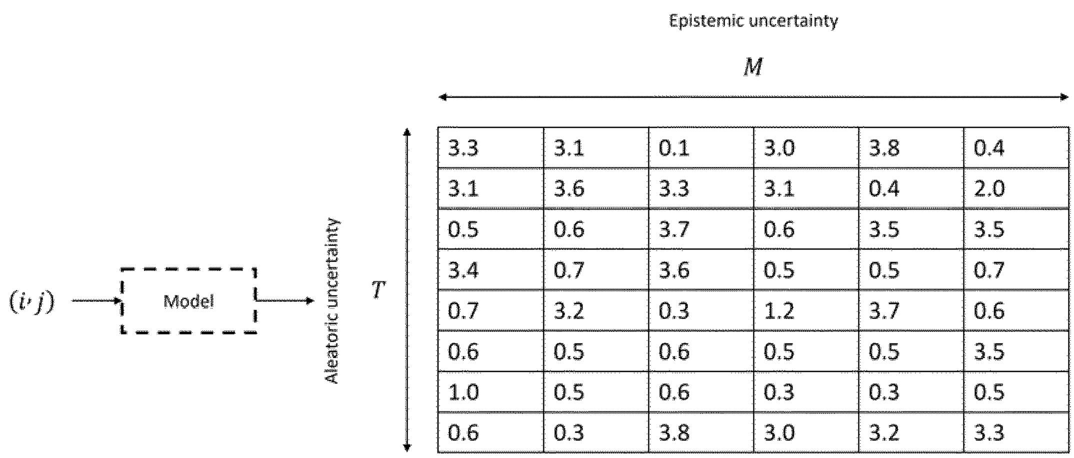


| | | | | | |
|---|---|---|---|---|---|
| 3.3 | 3.1 | 0.1 | 3.0 | 3.8 | 0.4 |
| 3.1 | 3.6 | 3.3 | 3.1 | 0.4 | 2.0 |
| 0.5 | 0.6 | 3.7 | 0.6 | 3.5 | 3.5 |
| 3.4 | 0.7 | 3.6 | 0.5 | 0.5 | 0.7 |
| 0.7 | 3.2 | 0.3 | 1.2 | 3.7 | 0.6 |
| 0.6 | 0.5 | 0.6 | 0.5 | 0.5 | 3.5 |
| 1.0 | 0.5 | 0.6 | 0.3 | 0.3 | 0.5 |
| 0.6 | 0.3 | 3.8 | 3.0 | 3.2 | 3.3 |

That is, the predictive distribution may be represented as a joint distribution of both epistemic and aleatoric uncertainties using Monte Carlo samples. This is especially necessary if multi-modality is hypothesized in the prediction, since multi-modal distributions are difficult to parameterize using single statistical distribution. In the fictive example above, there exist two modes around 3.3 and 0.5 respectively. However, if only a single mode (k=1) is assumed in the data / prediction, the distributions of the respective Gaussian parameters may directly be interpreted as:

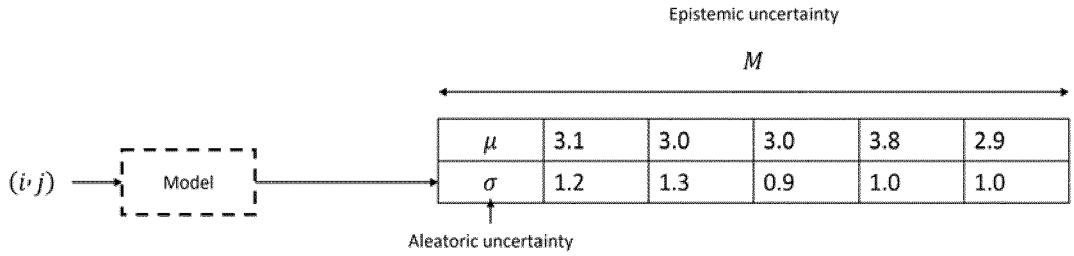


where a standard deviation quantifies the aleatoric uncertainty.

Training of such a fully Bayesian parameterized model comprising a mixture model as described herein may be challenging especially during an early phase of training. The training objective (as described above) may comprise the data likelihood to be maximized $MD(y_n|\pi(x_n, \theta), \mu(x_n, \theta), \sigma(x_n, \theta))$. For illustration purposes and without limiting the present disclosure in any way, if one Gaussian is assumed (K=1) then the MD collapses to a single Gaussian $N(y_n \,|\mu(x_n, \theta), \sigma(x_n, \theta))$. Then to maximize the likelihood there are two possibilities:

i) One may update $\mu(x_n, \theta)$ such that it becomes closer to the observation $y_n$, which is what traditional mean square loss would encourage the model to do.

ii) One increases or decreases the standard deviation $\sigma(x_n, \theta)$. When $(x_n, \theta)$ is already close to observation $y_n$, the likelihood will increase if one decreases $\sigma$; and if $(x_n, \theta)$ is far away from $y_n$, increasing $\sigma$ will increase the likelihood, as illustrated below:

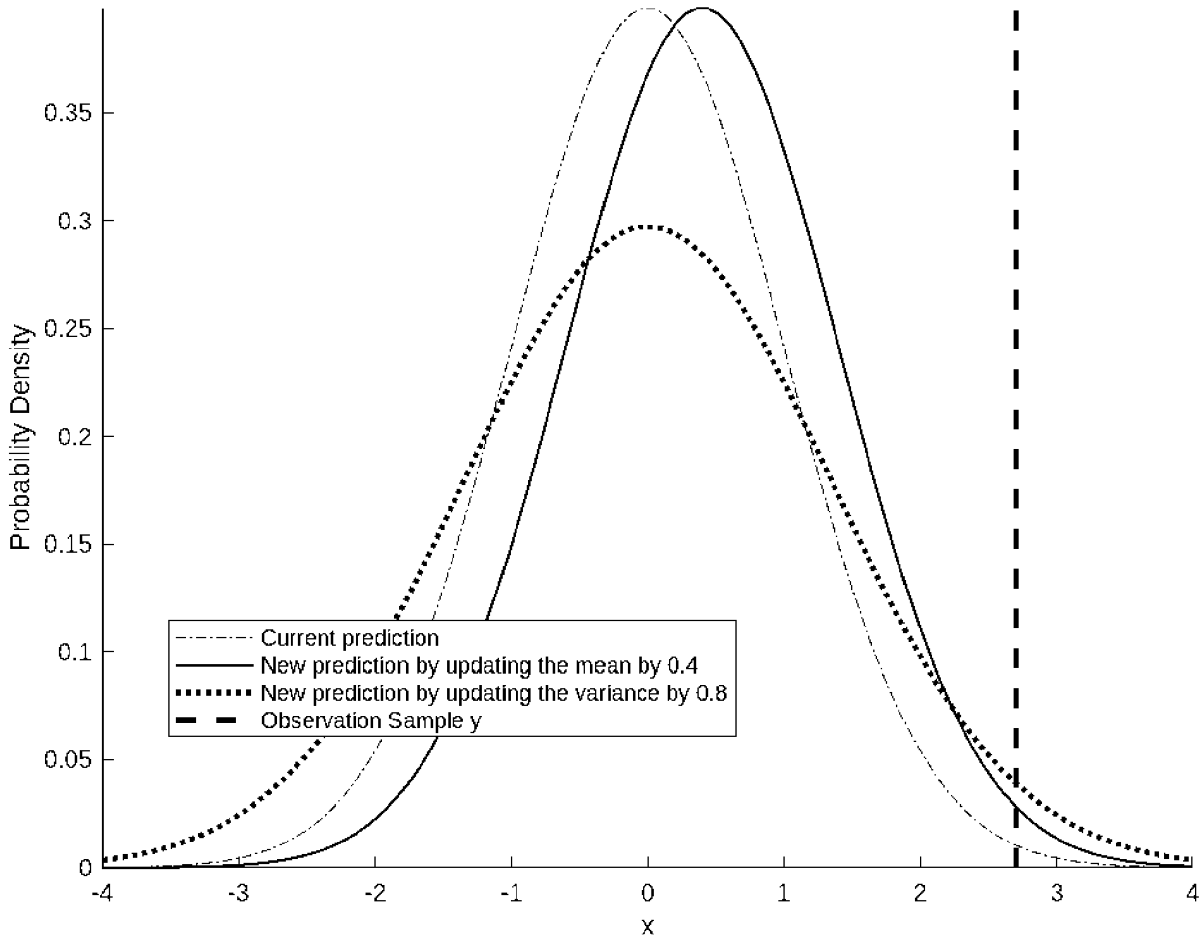


In the above illustrated example, the ground truth value (i.e., the observation sample - illustrated by the large dashed line) is 2.7 and the current estimate of the Gaussian is $N(0, 1)$ (dash-dot line). To increase the likelihood, one could - as simple MSE loss encourages - shift the expectation/mean to the right. A new distribution of say $N(0.4, 1)$ (continuous line) yields a larger probability density at 2.7. However, one could also increase the standard deviation. The alternative distribution $N(0, 1.8)$ (dot line) yields an even larger probability density at 2.7. This phenomenon makes the training of a mixture density model that parameterizes the standard deviation on the input with a large amount of weights challenging. Especially during the early phase of the training, it is safe to assume that the expectation $\mu(x_n, \theta)$ is far away from the ground truth values.

A greedy update rule based solely on a gradient will attempt to maximize the likelihood by increasing the $\sigma(x_n, \Theta)$ instead of improving $(x_n, \Theta)$, resulting in a trivial predictive distribution of arbitrarily large standard deviation (high uncertainty) and useless point estimate. To mitigate this issue, the present disclosure first may standardize the target variable such that it has a zero mean and standard deviation, and then may upper bound the prediction $\sigma(x_n, \theta)$ using a sigmoid function instead of the classical choice of exponential function, which is not upper bounded. For even finer control and easier debugging, the prediction may then be defined as

$$\sigma(x_n, \boldsymbol{\theta}) = \varepsilon + \gamma \cdot sigmoid\big(NN_{\boldsymbol{\theta}}(x_n)\big) (8)$$

The constant $\varepsilon$ may be a very small non-zero value to satisfy the definition of a Gaussian distribution. The sigmoid function first squeezes the output of a neural network applied on input data $x_n$ to the range of (0, 1) and $y > 0$ further scales down the output value. $y$ may be chosen with a couple of trial-and-error trainings or may also be a hyper parameter to be optimized. Under circumstances, one could even scale up the sigmoid activation by choosing a $y > 1$, encouraging certain heuristics or schedulers that may slowly increase y in the course of the training.

Fig. 2 is a schematic diagram illustrating a method (200) implemented on a computer for fully quantifying predictive uncertainty of a recommender system, according to the present disclosure. The method (200) may be applied in recommender systems for monitoring and/or controlling parameter values of devices and/or machines in a facility according to a state of the facility in an industrial environment, e.g., in a manufacturing process or motion control of a robot in an industrial shop floor.

The system (100) and method (200) according to the present disclosure may be implemented on a computing device, which may include further processing units (processors) and memory. The processors may comprise one or more microprocessors, microcontrollers, hardware circuits, discrete logic circuits, hardware registers, digital signal processors (DSPs), field-programmable gate arrays (FPGAs), application-specific integrated circuits (ASICs), programmable logic controllers (PLCs) or a combination thereof. The processors may be programmable hardware capable of executing software instructions stored (to perform the methods described herein), e.g., as a machine-readable computer program in the memory. The memory may comprise any non-transitory machine-readable media known in the art or that may be developed, whether volatile or non-volatile, including but not limited to solid state media (e.g., SRAM, DRAM, DDRAM, ROM, PROM, EPROM, flash memory, solid state drive, etc.). Further, the computing device may also include storage devices including, but not limited to removable storage devices (e.g., Secure Digital (SD) card, miniSD card, microSD card, memory stick, thumb-drive, USB flash drive, ROM cartridge, Universal Media Disc), fixed drive (e.g., magnetic hard disk drive), or the like, wholly or in any combination. Similarly, the computing device may also have input device(s) such as keyboard, mouse, pen, voice input, etc. and/or output device(s) such as a display, speakers, printer, etc. Also included in the computing device may be one or more communication connections, such as LAN, WAN, point to point, etc. In embodiments, the connections may be operable to facilitate point-to-point communications, connection-oriented communications, connectionless communications, etc. The computing device may further include interface circuitry configured to control input and output (I/O) data paths of the computing device. For example, such I/O data paths may include data paths for receiving user-item input pair from a database or from recommender applications to be uncertainty-quantified.

The method (200) may comprise an initial step of assigning (202) a prior distribution over a plurality of weight parameters of a model parameter set of the neural network model such that a corresponding posterior distribution represents an epistemic uncertainty of the neural network model. Then, in step (204), a mixture density model is incorporated for a target layer of the neural network model, wherein the mixture density model models aleatoric uncertainty of input data. In step (206), the posterior distribution of the weight parameters given training data is estimated by updating the prior distribution based on data likelihood of the training data. Next, in step (208), a plurality of empirical samples is sampled from the estimated posterior distribution of the weight parameters, in step (210) inference for each stochastic realization of the neural network model is performed with the sampled weight parameters on an inference sample to generate one or more predictive distributions. Lastly, in step (212), samples are drawn from each of the one or more predictive distributions as final predictions for the inference sample to obtain a matrix of predictions for the inference sample, wherein the matrix represents a joint distribution of both the aleatoric and epistemic uncertainty of the recommender system.

The methods and systems described herein provide efficient and simultaneous quantification of both aleatoric and epistemic uncertainty of a prediction model, such as a recommender system.

Although the present disclosure has been described in accordance with preferred embodiments, it should be clear for the person skilled in the art that modifications are possible in all embodiments. Further possible implementations or alternative solutions of the invention also encompass combinations - that are not explicitly mentioned herein - of features described above or below regarding the embodiments. The person skilled in the art may also add individual or isolated aspects and features to the most basic form of the present disclosure.

## Claims

**1.** A computer-implemented method for fully quantifying predictive uncertainty of a recommender system using a fully Bayesian multiway neural network model, the method comprising:

assigning a prior distribution over a plurality of weight parameters of a model parameter set of the neural network model such that a corresponding posterior distribution represents an epistemic uncertainty of the neural network model;
incorporating a mixture density model for a target layer of the neural network model,
wherein the mixture density model models aleatoric uncertainty of input data;
estimating the posterior distribution of the weight parameters given training data by updating the prior distribution based on data likelihood of the training data;
sampling a plurality of empirical samples from the estimated posterior distribution of the weight parameters;
performing inference for each stochastic realization of the neural network model with the sampled weight parameters on an inference sample to generate one or more predictive distributions;
drawing samples from each of the one or more predictive distributions as final predictions for the inference sample to obtain a matrix of predictions for the inference sample, wherein the matrix represents a joint distribution of both the aleatoric and epistemic uncertainty of the recommender system.

**2.** The computer-implemented method of claim 1, wherein the inference sample comprises an input pair of two or more categories of entities whose relation is modelled by a mapping function.

**3.** The computer-implemented method of claim 1 or 2, wherein the inference sample comprises an input pair comprising a setting of an adjustable parameter of a device in a facility and a certain operating state of the facility; or
wherein the input pair comprises a user and an item and the mapping function between them comprises an amount of time the user has spent browsing the item.

**4.** The computer-implemented method of any of the preceding claims, wherein the mixture density model comprises a Gaussian mixture model.

**5.** The computer-implemented method of any of the preceding claims, wherein estimating the posterior distribution comprises using a variational distribution comprising a family of isotropic Gaussian distributions.

**6.** The computer-implemented method of claim 5, wherein estimating the posterior distribution further comprises maximizing an Evidence Lower Bound, ELBO, term between the family of isotropic Gaussian distributions and the posterior distribution of the weight parameters, so that a Kullback-Leibler, KL, divergence from the family of isotropic Gaussian distributions to the posterior distribution of the weight parameters is minimized.

**7.** The computer-implemented method of claim 6, wherein estimating the posterior distribution further comprises updating the ELBO term using a re-parameterization approach.

**8.** The computer-implemented method of any of the preceding claims, wherein the mixture density model generates three vectors as output to parameterize a Gaussian mixture model; and/or
wherein the prior distribution over the weight parameters is a uniform distribution.

**9.** The computer-implemented method of any of the preceding claims, wherein the one or more predictive distributions are generated by incorporating the sampled parameters into the mixture density model.

**10.** The computer-implemented method of any of the preceding claims, further comprising upper bounding the one or more predictive distributions using a sigmoid function.

**11.** The computer-implemented method of any of the preceding claims, wherein rows of the matrix represent the stochastic realizations of the neural network model and columns of the matrix represent the samples drawn from each predictive distribution.

12. The computer-implemented method of any of the preceding claims, further comprising adjusting a size of the empirical samples and a number of samples drawn from each predictive distribution.

13. Recommender system for providing a recommended setting for a parameter to be adjusted, comprising a computer configured to execute the method according to any one of claims 1 to 12 so that a joint distribution of both the aleatoric and epistemic uncertainty of the recommender system regarding the recommended setting is provided with the recommended setting.

14. A non-transitory computer-readable storage medium storing computer-executable instructions that, when executed by at least one processor, cause the at least one processor to perform the method of according to any of claims 1 to 12.

15. A computer program product comprising instructions which when executed by at least one processor, cause the at least one processor to perform the method according to any of claims 1 to 12.

16. A system for quantifying predictive uncertainty of a recommender system using a fully Bayesian multiway neural network model, the system comprising:

one or more processing devices; and
one or more storage devices, the one or more storages devices storing computer-readable instructions that, when executed by the one or more of the processors, cause the one or more of the processors to perform the method according to any of claims 1 to 12.

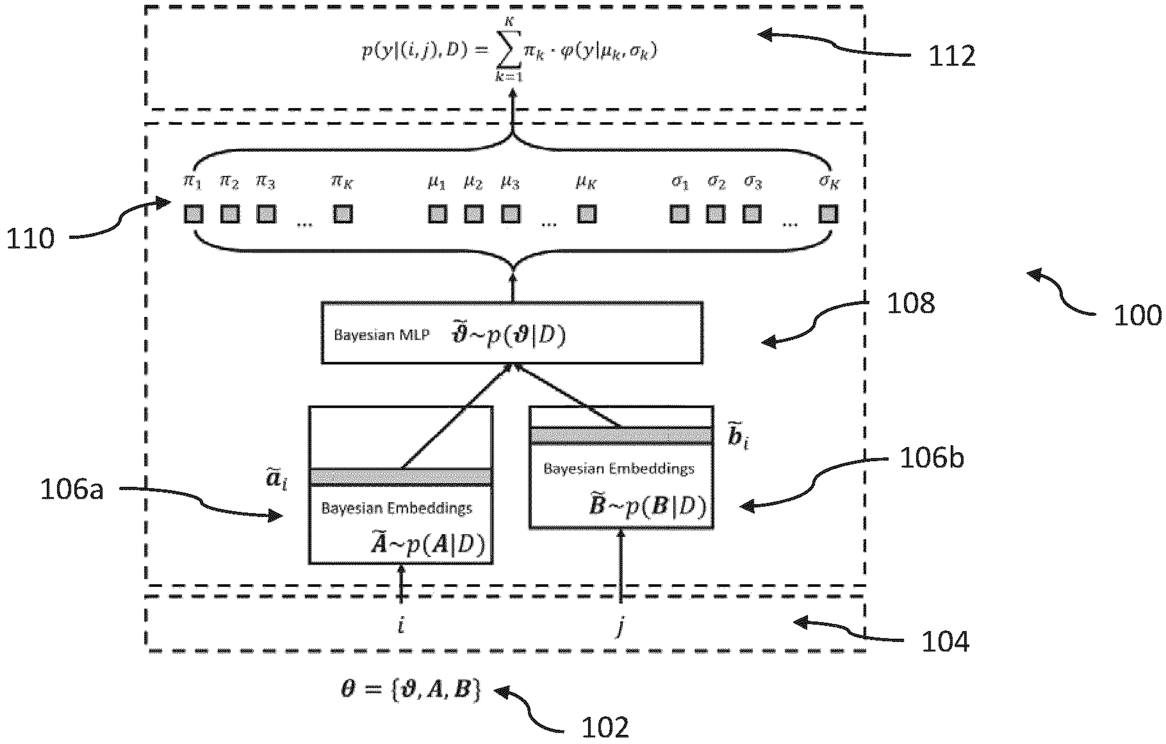
$p(y|(i,j),D) = \sum_{k=1}^{K} \pi_k \cdot \varphi(y|\mu_k,\sigma_k)$
112
110
$\pi_1$ $\pi_2$ $\pi_3$ ... $\pi_K$ $\mu_1$ $\mu_2$ $\mu_3$ ... $\mu_K$ $\sigma_1$ $\sigma_2$ $\sigma_3$ ... $\sigma_K$
Bayesian MLP $\tilde{\boldsymbol{\vartheta}} \sim p(\boldsymbol{\vartheta}|D)$
108
100
$\tilde{\boldsymbol{a}}_i$
Bayesian Embeddings
$\tilde{\boldsymbol{A}} \sim p(\boldsymbol{A}|D)$
106a
$\tilde{\boldsymbol{b}}_i$
Bayesian Embeddings
$\tilde{\boldsymbol{B}} \sim p(\boldsymbol{B}|D)$
106b
$i$
$j$
104
$\boldsymbol{\theta} = \{\boldsymbol{\vartheta}, \boldsymbol{A}, \boldsymbol{B}\}$
102

Fig. 1

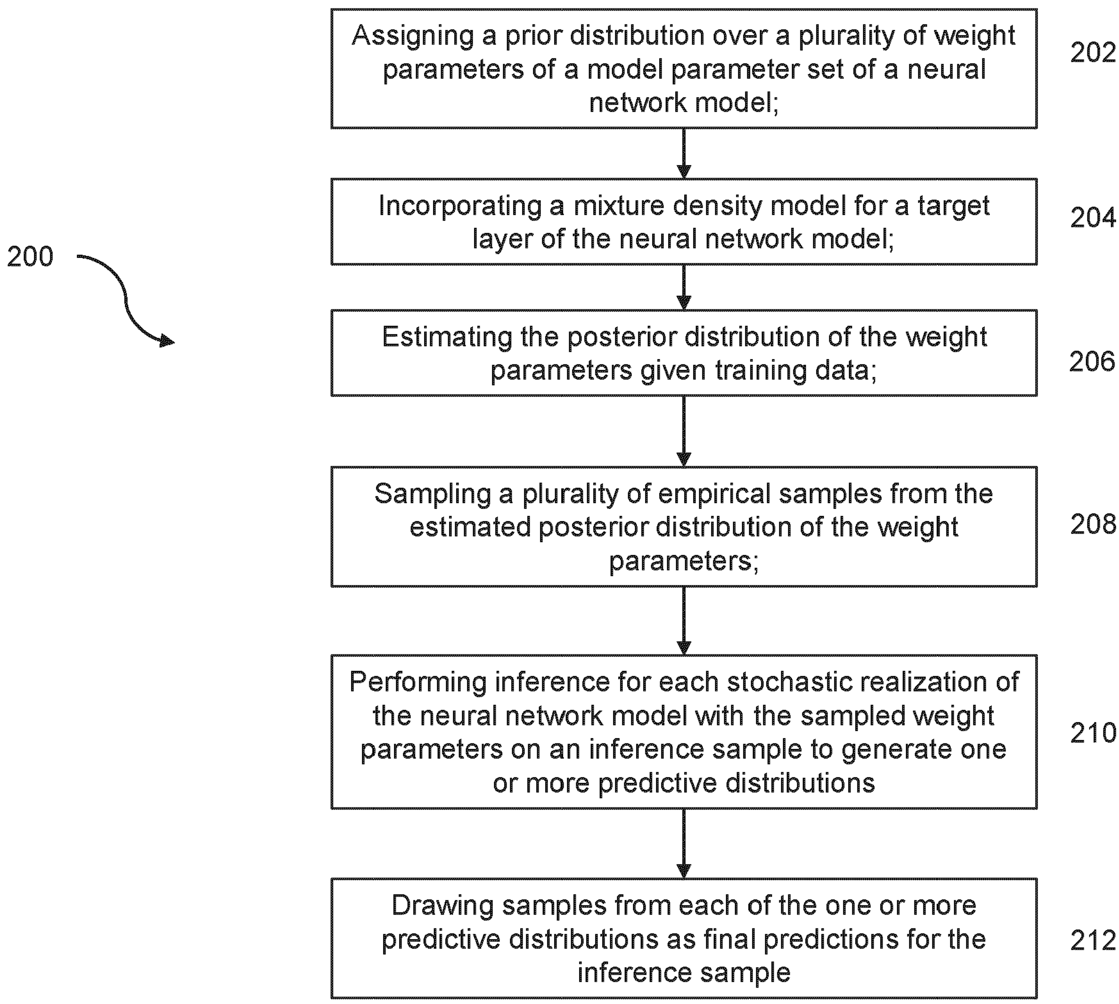
200
Assigning a prior distribution over a plurality of weight parameters of a model parameter set of a neural network model;
202
Incorporating a mixture density model for a target layer of the neural network model;
204
Estimating the posterior distribution of the weight parameters given training data;
206
Sampling a plurality of empirical samples from the estimated posterior distribution of the weight parameters;
208
Performing inference for each stochastic realization of the neural network model with the sampled weight parameters on an inference sample to generate one or more predictive distributions
210
Drawing samples from each of the one or more predictive distributions as final predictions for the inference sample
212

Fig. 2

Europäisches Patentamt
European Patent Office
Office européen des brevets

# EUROPEAN SEARCH REPORT

Application Number
EP 24 17 9282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YOEL ZELDES ET AL: "Deep density networks and uncertainty in recommender systems", ARXIV.ORG, CORNELL UNIVERSITY LIBRARY, 201 OLIN LIBRARY CORNELL UNIVERSITY ITHACA, NY 14853, 7 November 2017 (2017-11-07), XP081316281, * Sections 2-5 * ----- | 1-16 | INV. G06N3/042 G06N3/047 G06N3/09 G06N5/025 G06N7/01 G06N20/10 |
| A | LAURENT VALENTIN JOSPIN ET AL: "Hands-on Bayesian Neural Networks -- a Tutorial for Deep Learning Users", ARXIV.ORG, CORNELL UNIVERSITY LIBRARY, 201 OLIN LIBRARY CORNELL UNIVERSITY ITHACA, NY 14853, 3 January 2022 (2022-01-03), XP091123389, * the whole document * ----- | 1-16 | |
| A | RAD RADIN HAMIDI ET AL: "A Variational Neural Architecture for Skill-based Team Formation", ACM TRANSACTIONS ON INFORMATION SYSTEMS, ASSOCIATION FOR COMPUTING MACHINERY, 2 PENN PLAZA, SUITE 701 NEW YORK NY 10121-0701 USA, 4 April 2023 (2023-04-04), XP059178957, ISSN: 1046-8188, DOI: 10.1145/3589762 * the whole document * ----- -/-- | 1-16 | TECHNICAL FIELDS SEARCHED (IPC) G06N |

The present search report has been drawn up for all claims

1

| Place of search | Date of completion of the search | Examiner |
|---|---|---|
| The Hague | 15 November 2024 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 24 17 9282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JACQUIER PIERRE ET AL: "Non-intrusive reduced-order modeling using uncertainty-aware Deep Neural Networks and Proper Orthogonal Decomposition: Application to flood modeling", JOURNAL OF COMPUTATIONAL PHYSICS, LONDON, GB, vol. 424, 21 September 2020 (2020-09-21), XP086317427, ISSN: 0021-9991, DOI: 10.1016/J.JCP.2020.109854 [retrieved on 2020-09-21] * the whole document * ----- | 1-16 | |

TECHNICAL FIELDS SEARCHED (IPC)

The present search report has been drawn up for all claims

1

| Place of search | Date of completion of the search | Examiner |
|---|---|---|
| The Hague | 15 November 2024 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)